# EUROPEAN PATENT APPLICATION

(11) **EP 4 331 763 A1**
(43) Date of publication of application: **06.03.2024**
(21) Application number: 23193582.6
(22) Date of filing: 25.08.2023
(51) Int. Cl.: B23D 53/00, B26D 1/48, B26D 1/54, B26D 1/46, B23D 53/04, B23D 55/04, B23D 55/08, B23D 55/10, B27B 13/08, B27B 13/10, B26D 3/16, B26D 7/06, B23Q 3/06, B26D 7/01

(54) **PROCESSING MACHINE FOR CUTTING MATERIALS**

(30) Priority: 01.09.2022 IT 202200018000
(71) Applicant: Rusch S.r.l., 35016 Thiene (VI) (IT)
(72) Inventor: SCORTEGAGNA, Mariano, 36016 THIENE (VI) (IT)
(74) Representative: Burchielli, Riccardo

(57) **Abstract**

Machine tool (10) for cutting a workpiece (100), preferably a fully electric band saw machine comprising:
- two blade-guiding arms (11);
- a fixed vice (12);
- a carriage vice (13);
- an arch 40;
- an advance carriage (50);
- a blade tensioner (60).

Advantageously, these elements included in said machine tool are moved by corresponding electrical handling systems (20; 21; 22; 23).

## Description

The present invention concerns a machine tool for cutting materials.

### Field of the invention

In particular, the invention concerns a machine tool for cutting bars made of different materials, which is completely electric and therefore free from an oleodynamic/pneumatic system.

### Prior art

Currently, there are different types of machine tools adapted to cut materials.

Sawing machines of the known type, also called mechanical saws, can basically be of three types:
- Hack saw machines, wherein the tool consists of a bow saw, having a shape very similar to the hand hacksaw for metals, which puts under tension a straight blade; the working motion is alternating, and the cutting pressure can be regulated using different types of devices;
- Band saw machines, wherein the tool structurally resembles the band saw typically used for wood, but with smaller dimensions and greater sturdiness; the blade forms a closed loop, and the working motion is continuous. In almost all machines the belt is arranged horizontally instead of vertically;
- Disc or circular saw machines, structurally similar to the circular saw for wood, but with different types of disc blades.

Currently, there are different types of machine tools adapted to cut materials, an example are hydraulic/pneumatic sawing machines.

With particular reference to the world of band saws, in the latter an oleodynamic system is used to produce the movement of the moving parts of the machine.

More specifically, the moving parts of the machine are:
- The arch, called "advancing work";
- The blade tensioner, which is used to put under tension the blade;
- A fixed vice, adapted to hold the workpiece during cutting;
- A mobile vice, used to bring the workpiece to be cut to size and/or during cutting;
- An advance carriage, adapted to move the mobile vice to bring the workpiece to size;
- Any additional vices which are fixed or mobile or holding bundles.

Over the last few years, only some of these moving parts have been replaced by electric actuators, especially the advance carriage and the arch movement, as the electric movement is faster and more precise than the oleodynamic one.

Furthermore, known hydraulic/pneumatic machines present different types of limitations, generally in terms of performance, speed and sustainability.

More specifically, this type of state-of-the-art machines is often slow in movement and presents difficulties in maintaining precision, this is because depending on the temperature there is a change in viscosity of the fluids which leads to change the oil/filter and/or to a high number of maintenances. In fact, replacing oils/filters is not very popular with customers and this leads to a degradation in the performance of the machines.

Furthermore, replacing oils or filters generates waste that must be disposed of.

### Aim of the invention

Therefore, the aim of the present invention is to propose a machine tool for cutting materials, which overcomes the prior art issues described above.

More specifically, the aim of the present invention is to provide a machine tool for cutting materials which makes it possible to overcome the prior art issues described above.

Another aim of the present invention is to provide a machine tool for cutting materials which makes it possible to improve its performances in terms of speed and precision.

Another aim of the present invention is to create a machine tool for cutting materials that makes it possible to reduce maintenances.

A further aim of the present invention is to provide a machine tool for cutting materials that makes it possible to eliminate the production of waste such as oils and/or filters, thus becoming more ecological and sustainable.

### Object of the invention

The object of the present invention is therefore a machine tool for cutting materials according to the attached claim 1; other detailed technical features are reported in the dependent claims.

### Brief description of the figures

The present invention will now be described for illustrative, but not limiting, purposes, according to one of its preferred embodiments, with particular reference to the attached figures, wherein:
- Figure 1 is a perspective view of the machine tool, according to the present invention;
- Figure 2A is an internal view of the machine tool from figure 1, which is substantially frontal and wherein a detail of the open self-centring fixed vice is visible;
- Figure 2B is an internal view of the machine tool from figure 1, which is substantially frontal and wherein a detail of the fixed self-centring vice from Figure 2A is visible in its closed or engaged position;
- Figure 3A is an internal view of the machine tool from Figure 1, which is substantially frontal and wherein a detail of the open self-centring carriage vice is visible;
- Figure 3B is an internal view of the machine tool from Figure 1, which is substantially frontal and wherein a detail of the closed self-centring carriage vice from Figure 2A is visible;
- Figure 4 is a perspective view of a detail of the machine tool from Figure 1, wherein the movement of the machine tool arch is schematised;
- Figures 5A-5B is a perspective view of a detail of the machine tool from Figure 1, wherein the movement of the machine tool carriage is schematised;
- Figure 6 is a front view of a detail of the machine tool shown in Figure 1,
wherein a schematisation of the blade tensioning operation is visible.

### Detailed description

With reference to the figures mentioned, 10 generally indicates a machine tool for cutting materials.

Advantageously, such machine tool 10 is a band saw machine that is completely electric in all its parts and therefore free from an oleodynamic/pneumatic control unit.

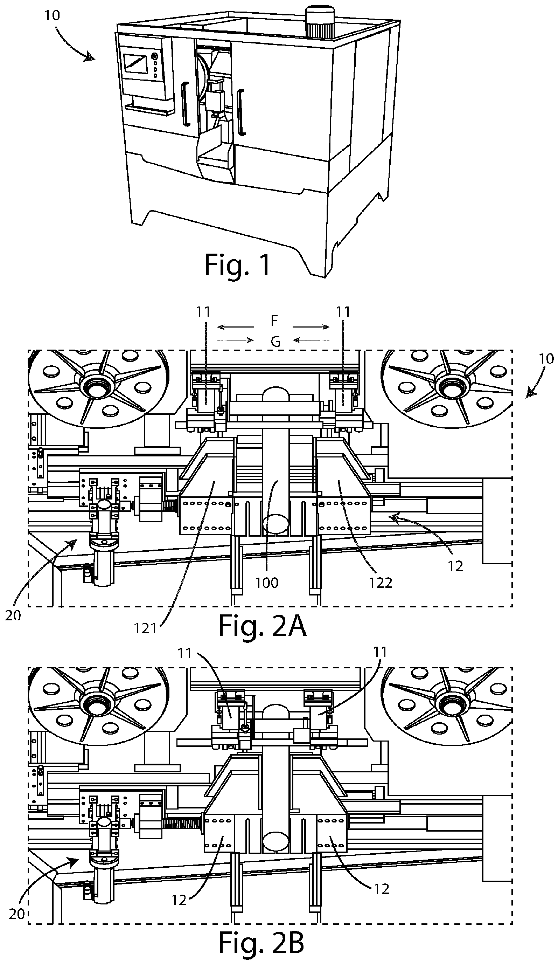

As visible in Figures 2A and 2B, the machine tool 10 includes two blade-guiding arms 11 facing each other and, when in use, placed in correspondence with two opposite sides of the workpiece 100 to be cut.

Advantageously, the two blade-guiding arms 11 have a first non-use position wherein they are open (Fig.2A) i.e. moved away from each other according to the opposite directions of moving away described by the arrows indicated with F in the figure and a second position wherein they are closed and then approach each other (Fig. 2B) according to opposite approach directions described by the arrows G indicated in the figure.

Furthermore, the machine 10 has, underneath the two arms 11, a fixed vice 12 having a first end 121 and a second end 122 adapted, when in use, and therefore when brought closer, to hold the workpiece 100 during cutting.

Similarly to what was said for the blade-guiding arms 11, also the fixed vice 12 has a first position of non-use (Fig.2A) wherein the two ends 121 and 122 of the vice 12 are spaced apart in the first direction F and a second position of use wherein the two ends are brought closer to each other in the second direction G opposite to direction F, in such a way as to retain the workpiece 100 (Fig. 2B).

Advantageously, the movement of the blade-guiding arms 11 and of the fixed vice 12 is carried out by a first electrical handling system 20.

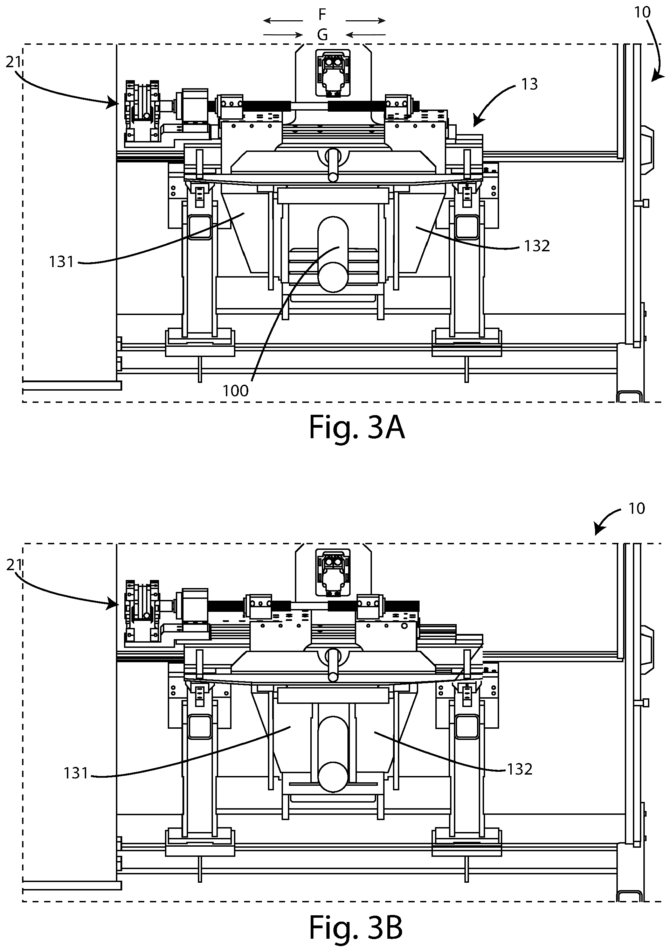

As visible in Figures 3A and 3B, the machine 10 also includes a carriage vice 13 comprising a relative first end 131 and a relative second end 132 adapted to move in a manner similar to the previously described arms 11, moving away from each other in direction F and approaching each other in direction G.

Also in this case, advantageously, the carriage vice 13 is moved by a second electrical movement system 21.

Generally, according to the present invention, the movement of the vices 12, 13 can be carried out via a right-handed/left-handed screw if it is intended to obtain self-centring vices 12 and 13, or a single screw and floating vice, in the case of clamping on a single relative end, respectively, for the vice 12: the first end 121 or the second end 122; for the vice 13: the first end 131 or the second end 132.

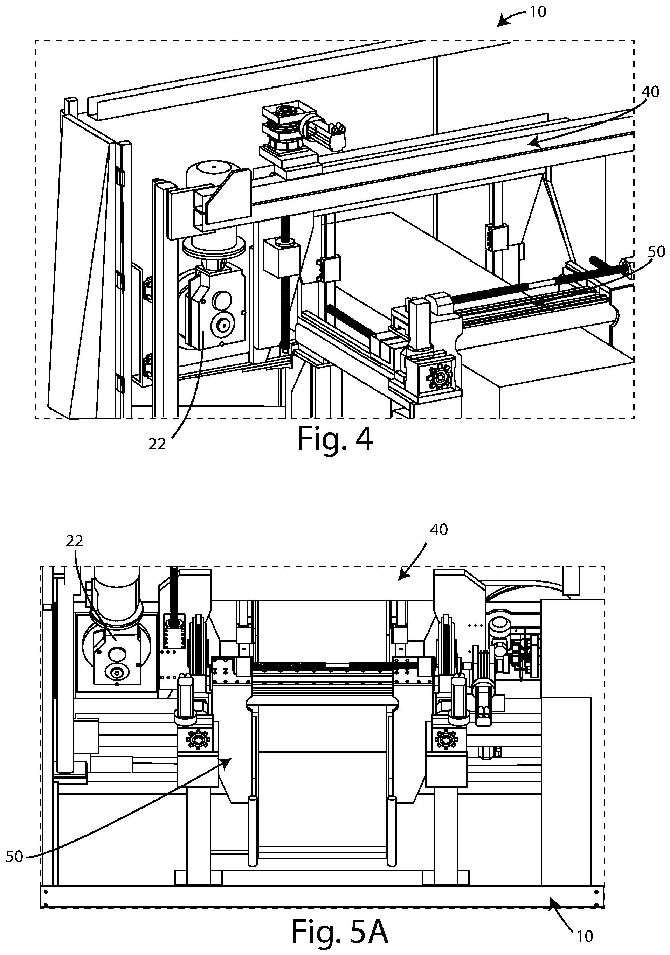

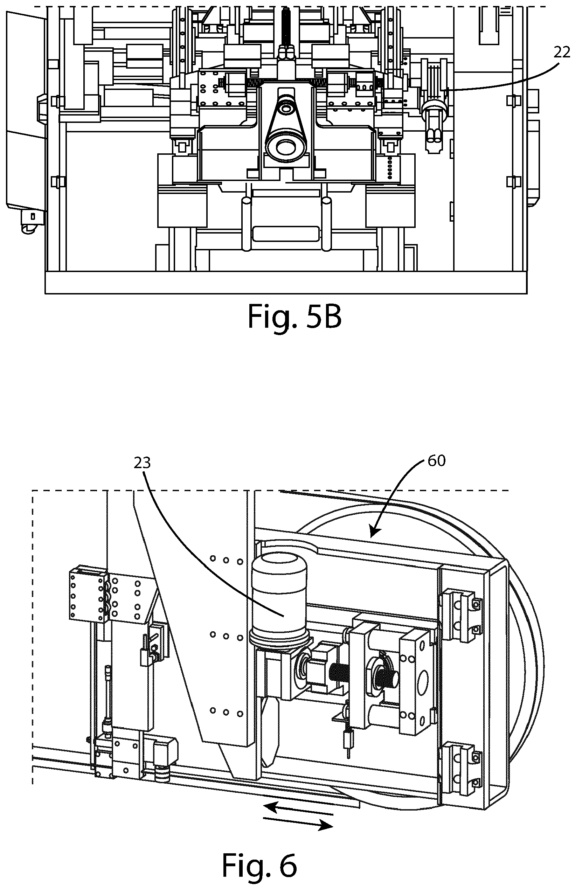

With reference to Figure 4 and Figures 5A and 5B, the machine 10 also includes an arch 40, suitable for allowing the advance of the work of the machine tool 10 and an advance carriage 50 to bring the workpiece 100 to size during cutting.

Also in this case, advantageously, both the arch 40 and the carriage 50 are moved by an electrical handling system 22.

More specifically, in the case of the carriage 50 the related electrical handling system 22 includes one or two recirculating screws for short strokes or one or two racks for long strokes.

Finally, with reference to Figure 6, the machine 10 includes a blade tensioner 60 adapted to put under tension the blade of the machine tool 10.

Similarly to the previous cases, the blade tensioner 60 has two positions of use, a first tensioning position indicated by direction T in the figure and a second detensioning position indicated by direction D in the figure, opposite to direction T.

Advantageously, also in this case the movement is carried out via an electrical handling system 23.

More in detail, such electrical handling system 23 is an electric motor or, alternatively, a motor with a closed-circuit oleodynamic cylinder, such system uses a screw or a lever for tensioning, without using any oleodynamic control unit.

Generally, the electrical handling systems 20, 21, 22 and 23, object of the present invention include recirculating ball screws and/or racks and electric motors, preferably brushless and preferably with multiturn absolute encoders, electric motor-gearbox-screw or electric motor-screw systems.

Alternatively, using transmissions of the following type: electric motor-gearbox-pinion/rack or electric motor-pinion/rack.

Finally, such systems can include electric motors with or without gearbox.

From the description given, the features of the machine tool, which is the object of the present invention, are clear, as well as its advantages.

Finally, it is clear that a preferred embodiment of the present invention has been described in the foregoing, but it is to be understood that those skilled in the art will be able to make modifications and changes without thereby departing from the relevant scope of protection, as defined by the attached claims.

## Claims

1. A machine tool (10) for cutting a workpiece (100), preferably a fully electric band saw machine comprising:
- two blade-guiding arms (11) facing each other and, when in use, placed at opposite sides of said workpiece (100);
- a fixed vice (12) placed in a position below said two blade-guiding arms (11) and having a first end (121) and a second end (122) facing each other and placed at two opposite sides of said workpiece (100) so as to hold it when in use;
- a carriage vice (13) comprising a relative first end (131) and a relative second end (132) facing each other and placed at two opposite sides of said workpiece (100);
- an arch 40, adapted to make it possible the advancing work of the machine tool (10);
- an advance carriage (50) for bringing the workpiece (100) to size during cutting;
- a blade tensioner (60) adapted to put under tension a blade of said machine tool (10), for cutting said workpiece (100),
**characterised in that** said fixed vice (12), said carriage vice (13), said arch (40), said advance carriage (50) and said blade tensioner (60) are moved by means of respective electrical handling systems (20; 21; 22; 23).

2. The machine tool (10) according to claim 1, **characterised in that** said arms (11) and said fixed vice (12) are moved by means of a first electrical handling system (20) between a first position of non-use wherein said arms (11) and said first and second ends (121, 122) are moved away from each other according to opposite directions of moving away (F) and a second position of use wherein they are brought closer together according to opposite directions of approach (G).

3. The machine tool (10) according to claim 1, **characterised in that** said carriage vice (13) is moved by means of a second electrical handling system (21) between a first position of non-use wherein said relative first and second ends (131, 132) are moved away from each other according to relative opposite directions of moving away (F) and a second position of use wherein they are brought closer together according to relative opposite directions of approach (G).

4. The machine tool (10) according to at least one of claims 2 or 3, **characterised in that** said first electrical system (20) or said second electrical system (21) comprises a right/left-handed screw if it is intended to obtain self-centring vices (12) and (13), or a single screw and floating vice, in the case of clamping on a single relative end (121; 122; 131; 132).

5. The machine tool (10) according to claim 1, **characterised in that** said arch (40) and said carriage (50) are moved through a third electrical handling system (22).

6. The machine tool (10) according to claim 5, **characterised in that** said third electrical handling system comprises one or two recirculating screws for short strokes of said carriage (50) or one or two racks for long strokes of said carriage (50).

7. The machine tool (10) according to claim 1, **characterised in that** said blade tensioner (60) is moved by a fourth electrical handling system (23) between a tensioning direction (T) and a detensioning direction (D) opposite to the tensioning direction (T).

8. The machine tool (10) according to the previous claim, **characterised in that** said fourth electrical handling system (23) is an electric motor or, alternatively, a motor with a closed-circuit hydraulic cylinder.

9. The machine tool (10) according to at least one of the preceding claims, **characterised in that** said electrical handling systems (20, 21, 22, and 23) comprise recirculating ball screws and/or racks and electric motors with or without gearbox, preferably brushless and preferably with multiturn absolute encoders, or electric motor-gearbox-screw or electric motor-screw systems, with transmissions of the type: electric motor-gearbox-pinion/rack or electric motor-pinion/rack.
